# EUROPEAN PATENT APPLICATION

(11) **EP 2 469 635 A1**
(43) Date of publication of application: **27.06.2012**
(21) Application number: 11192014.6
(22) Date of filing: 05.12.2011
(51) Int. Cl.: H01M 8/02, H01M 8/12

(54) **Method of making a solid oxide fuel cell stack**

(30) Priority: 22.12.2010 US 975836
(71) Applicant: Delphi Technologies, Inc., Troy, MI 48007 (US)
(72) Inventor: Mukerjee, Subhasish, Pittsford, NY 14534 (US)
(74) Representative: Denton, Michael John

(57) **Abstract**

A method of making a solid oxide fuel cell (SOFC) stack that includes the steps of applying a seal enhancing coating and a conductive coating onto respective surfaces of a separator plate and simultaneously co-firing the coatings in a reducing atmosphere. The method may also include, prior to the step of co-firing, the step of assembling a plurality of separator plates with complementary cell-retainer assemblies to form a plurality of fuel cell cassettes. The fuel cell cassettes are then stacked with a glass sealant applied between the fuel cell cassettes to form a SOFC stack. The entire SOFC stack is then co-fired in a reducing atmosphere such that the seal enhancing and conductive coatings are bonded into the respective surfaces and the glass sealant devitrify to form a glass seal joining and sealing the cassettes of the SOFC stack.

## Description

### TECHNICAL FIELD

The present disclosure is related to a method of making a Solid Oxide Fuel Cell (SOFC) stack; more particularly, a method of coating and assembling a SOFC stack.

### BACKGROUND OF INVENTION

Fuel cells are used to produce electricity when supplied with fuels containing hydrogen and an oxidant such as air. A typical fuel cell includes an ion conductive electrolyte layer sandwiched between a cathode layer and an anode layer. There are several different types of fuel cells known in the art; amongst these are solid oxide fuel cells (SOFC). SOFC are regarded as highly efficient electrical power generator that produces high power density with fuel flexibility.

In a typical SOFC, air is passed over the surface of the cathode layer and a fuel containing hydrogen is passed over the surface of the anode layer opposite that of the cathode layer. Oxygen ions from the air migrate from the cathode layer through the dense electrolyte to the anode layer in which it reacts with the hydrogen and CO in the fuel, forming water and CO₂; thereby, creating an electrical potential between the anode layer and the cathode layer of about 1 volt.

Each individual SOFC is mounted within a metal frame, referred to in the art as a retainer, to form a cell-retainer assembly. The individual cell-retainer assembly is then joined to a metal separator plate, also known as an interconnector plate, to form a fuel cell cassette. The fuel cell cassettes are stacked in series with a seal applied about the perimeter of adjacent fuel cell cassettes to form a SOFC stack.

The separator plate, or interconnector plate, includes an anode facing surface, which is oriented toward the anode layer of the SOFC in the cell-retainer assembly to which it is attached, and an opposite cathode facing surface, which is oriented toward the cathode layer of the SOFC of the adjacent fuel cell cassette. The seal is applied between the sealing surfaces of the cathode facing surface of the separator plate and the sealing surfaces of the cell-retainer assembly of the adjacent cassette.

Portions of the anode facing surface and cathode facing surface of the separator plate are conductive surfaces. Traditionally, before assembly of the separator plate to the cell-retainer assembly, conductive coatings are provided on the conductive surfaces for enhanced electron conduction and to prevent chromium poisoning of the cathode layer of the SOFC of the adjacent cassette. A seal enhancing coating is provided along the sealing surfaces of the separator plate to enhance the adhesion and strength of the seal.

After the conductive coating is applied, the separator plate is heat treated at a first temperature to sinter the conductive coatings onto the separator plate. Then, the seal enhancing coating is applied along the sealing surfaces of the separator plate. The separator plate is heat treated at a second temperature to sinter the seal enhancing coating onto the separator plate. It is known in the art to apply the seal enhancing coating first and then the conducting coating or vise-versa; however, each coating process requires heat treating at different temperatures, time periods, and atmosphere conditions. After the conductive and seal coatings are applied onto the separator plate and the separator plate is assembled into a cassette. A plurality of fuel cell cassettes is assembled into a SOFC stack with sealants, typically that of a glass matrix, therebetween fuel cell cassettes. The SOFC stack is then heat treated again at a third temperature, time period, and atmosphere to sinter the stack into one unit and to devitrify the sealant into a bonded glass joint.

This traditional process of coating and assembling a SOFC stack requires a multiple complex series of coating, heat treatment, and assembly operations for manufacturing a SOFC stack, which is labor intensive and costly. There is a need to have a method of coating and making of a SOFC stack that is simple and cost efficient.

### SUMMARY OF THE INVENTION

A method in accordance with the present invention is defined by the features of claim 1.

An embodiment of the present invention provides a method of making a solid oxide fuel cell (SOFC) stack that includes the steps of providing a separator plate having an anode conductive surface, a cathode conductive surface opposite of the anode conductive surface, and a sealing surface. A conductive coating is applied onto at least one of the conductive surfaces and a seal enhancing coating is applied onto the sealing surface. The coatings are simultaneously co-fired such that the conductive coating and seal enhancing coating are bonded into at least one of conductive surfaces and the sealing surface, respectively.

The coated separator plate is then joined to cell-retainer assembly to form a first fuel cell cassette. A second fuel cell cassette having a complementary sealing surface of the separator plate is provided. The first fuel cell cassette is assembled with the second fuel cell cassette with a glass sealant between the respective sealing surfaces to form a SOFC stack. The SOFC is then heat treated at a sufficiently high temperature and time to form a glass seal gasket therebetween the fuel cell cassettes.

Another embodiment of the invention provides a method of making a solid oxide fuel cell (SOFC) stack that includes the steps of providing a first cell-retainer assembly, providing a first separator plate having an anode conductive surface, a cathode conductive surface opposite of the anode conductive surface, and a sealing surface. A seal enhancing coating is applied onto the sealing surface of the first separator plate and a conductive coating is applied onto at least one of the conductive surface of first separator plate. The separator plate is joined onto the first cell-retainer assembly, thereby forming a first fuel cell cassette. A second fuel cell cassette having a sealing surface complementary with the sealing surface of the separator plate is provided, wherein the second fuel cell cassette is formed by the same method of making the first fuel cell cassette. A glass sealant is applied onto the sealing surface of first fuel cell cassette. The first fuel cell cassette is assembled onto the second fuel cell cassette with the glass sealant therebetween, thereby forming a SOFC stack. The SOFC stack is then heat treated to simultaneously co-fire the seal enhancing coating, conductive coating, and glass sealant such that the seal enhancing and conductive coatings are bonded onto the sealing surface and the at least one of conductive surfaces, respectively, and the glass sealant forms a glass gasket.

The improved method of coating and assembling a SOFC stack provides the advantages of a robust seal between the fuel cell cassettes as well as improved adherence of conductive and sealing coatings. The improve method reduces the complexity of manufacturing and lowers the costs of manufacturing a SOFC stack.

Further features and advantages of the invention will appear more clearly on a reading of the following detailed description of an embodiment of the invention, which is given by way of non-limiting example only and with reference to the accompanying drawings.

### BRIEF DESCRIPTION OF THE DRAWINGS

The present invention may best be understood from the following detailed description of the preferred embodiments illustrated in the drawings, wherein:

FIG. 1 is a schematic drawing of a solid oxide fuel cell (SOFC) mounted in a retainer frame.

FIG. 2 is an exploded isometric drawing of a portion of a SOFC stack employing a plurality of single-cell cassettes.

Fig. 3 is an isometric drawing of the underside of the separator plate shown in Fig. 2.

### DESCRIPTION OF THE PREFERRED EMBODIMENT

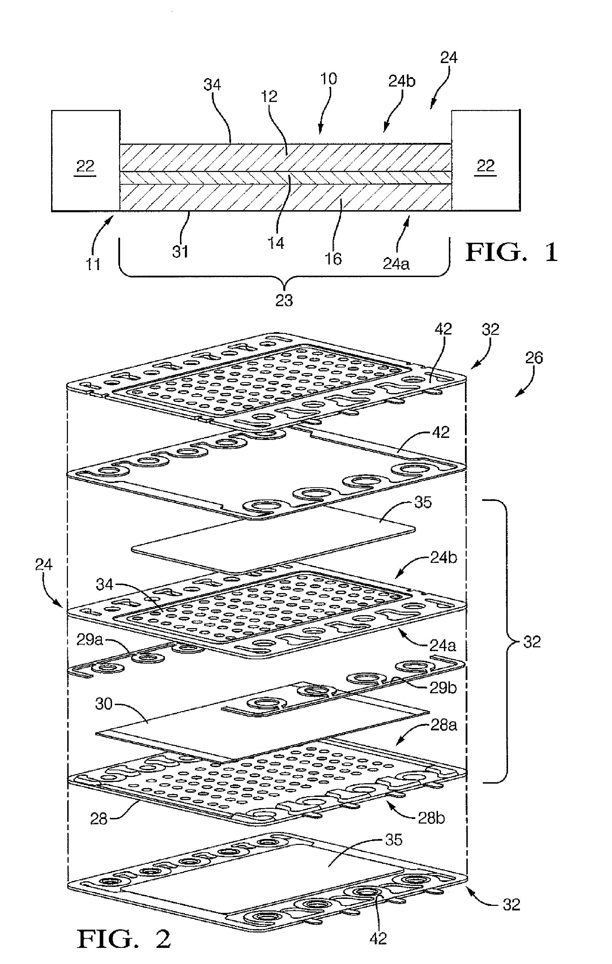

Shown in Figs. 1 through 3, wherein like numerals indicate corresponding parts throughout the figures, is an exemplary solid oxide fuel cell (SOFC) stack 26 and components of the SOFC stack 26.

Shown in Fig. 1 is a schematic drawing of a cross-section of a fuel cell 10 mounted in a cell retainer 22. The fuel cell 10 includes an electrolyte layer 14, a cathode layer 12 bonded onto one side of the electrolyte layer 14, and an anode layer 16 bonded to the opposite side of the electrolyte layer 14. The cathode layer 12 includes a cathode layer surface 34 and the anode layer 16 includes an anode layer surface 31. The cathode layer surface 34 and anode layer surface 31 are oriented away from the electrolyte layer 14 in a direction opposite of each other.

Each individual fuel cell 10 is mounted within a cell retainer 22 formed of a metal substrate. The cell retainer 22 defines a central opening or picture frame window 23. The fuel cell 10 is positioned in the picture frame window 23 and joined to the cell retainer 22 to form a cell-retainer assembly 24. The cell-retainer assembly 24 includes an anode side 24a and a cathode side 24b that correspond to the anode layer surface 31 and cathode layer surface 34 of the fuel cell 10, respectively.

Referring to Fig. 2, an intermediate process joins together each cell-retainer assembly 24 with a separator plate 28, an anode interconnect 30, and inlet and outlet anode spacers 29a, 29b to form an intermediate structure known as a fuel cell cassette 32. The separator plate 28 is typically stamped from a thin sheet of metal and formed to provide, when mated to the cell retainer 22 and joined to the anode spacers 29a, 29b, a flow space for the anode gas. Preferably, the separator plate 28 is formed from a ferritic stainless steel alloy containing chromium (Cr) for low cost and corrosion protection.

The anode interconnect 30 is positioned between the separator plate 28 and the anode layer surface 31 of the fuel cell 10 within the fuel cell cassette 32. A typical anode interconnect 30 is formed of a woven wire mesh of uniform thickness and is solid in the direction perpendicular to the anode layer surface 31 in a multitude of points. The anode interconnect 30 may also be stamped sheet metal with flow features and contacts such as flattened nails and ribs. A cathode interconnect 35 installed against the cathode layer surface 34 provides a cathode air flow space. The cathode interconnect 35 may also be of a woven wire mesh of uniform thickness and solid in the direction perpendicular to the cathode layer surface 34 in a multitude of points, as well as stamped sheet metal with flow features and contact features.

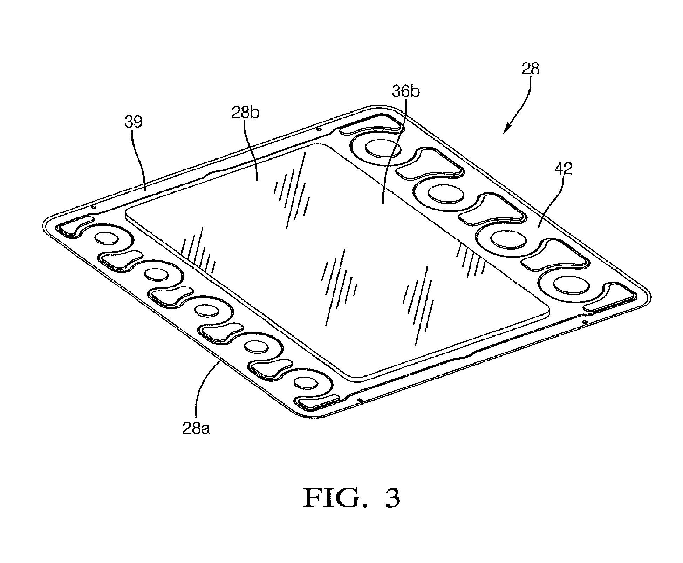

Best shown in Fig. 3 is an isometric drawing of the underside of the separator plate 28 shown in Fig. 2. The separator plate 28 serves as a separator for air and fuel flow, as well as a conductor of current, between adjacent fuel cell cassettes 32 of the SOFC stack 26. The separator plate 28 includes an anode conductive surface 28a, which is oriented toward the anode side 24a of the cell-retainer assembly 24, to which it is attached, and an opposite cathode conductive surface 28b, which is oriented toward the cathode side 24b of the cell-retainer assembly 24 of the adjacent fuel cell cassette 32. Once the fuel cell cassettes 32 are assembled into a SOFC stack 26, the anode conductive surface 28a of the separator plate 28 is in electrical contact with the anode interconnect 30 of the immediate fuel cell cassette 32 and the cathode conductive surface 28b is in electrical contact with the cathode interconnect 35 of the adjacent fuel cell cassette 32.

The separator plate 28 needs to retain its low electrical resistivity throughout the operating lifetime of the fuel cell 10 as well as high-temperature corrosion resistance. The desired characteristics for separator plate 28 can be satisfied by the use of chromium-oxide-forming high temperature materials. This group of materials formed at the typical SOFC operating temperatures includes a layer of chromium oxide that protects the material from rapid degradation by oxidation. However, at higher temperatures (about 300 °C to 1200 °C) the chromium oxide layer formed on the cathode conductive surface 28b of the separator plate 28 reacts with the oxygen in the air stream and H₂O to form chromium trioxide (CrO₃) and/or chromium oxide hydroxide (CrO₂(OH)₂, CrO(OH)₄). These Cr(VI) compounds have relatively high vapor pressures at these elevated temperatures and react with the cathode layer 12 of the fuel cell 10 in the adjacent fuel cell cassette 32 to limit the catalytic reaction of the oxygen, thereby reducing the power density and efficiency of the SOFC stack 26 in producing electricity.

To reduce the chromium evaporation and to enhance electrical conductivity, cobalt, oxides of cobalt, and mixtures thereof have been used to coat the conductive surfaces of the separator plate 28 to reduce the chromium evaporation. Spinel coatings have also been used to suppress the chromium evaporation. A spinel coating encompassing an element from the group of manganese, magnesium, and vanadium and a further element from the group of cobalt, nickel, iron, copper, and vanadium, which when arranged on a chromium oxide forming substrate, prevents a vaporization of chromium from the substrate to temperatures of 1000 °C.

During the assembly of the fuel cell cassettes 32 into a SOFC Stack 26, a glass sealant 42 is disposed on the sealing surfaces 39 of adjacent fuel cell cassettes 32. A sealing surface 39 is located about the perimeter of the separator plate 28 on the same side as the cathode conductive surface 28b. The glass sealant 42 is heat treated to devitrify the glass to form a bonded glass seal joint to provide a gas-tight seal to separate and contain the reactant gases and electrically isolate adjacent separator plates 28. To enhance the adhesion of the glass sealant 42, the corresponding sealing surfaces of the separator plate 28 and adjacent fuel cell cassette 32 may be coated with aluminum, aluminum oxide, or mixtures thereof.

The glass sealant 42 may be of glass-ceramic or glass seal in powder or paste form and the glass sealant 42 is applied about the sealing surfaces of the separator plate of the cassette or about the sealing surfaces 39 of the cathode side 24b of the cell-retainer assembly 24 of the adjacent cassette. It is desirable for the resulting glass sealant 42 to have a coefficient of thermal expansion that is comparable with components of the SOFC stack 26, a suitable viscosity to fill the seal gaps between fuel cell 10 and separator plate 28 and sustain at the sealing surfaces of the SOFC stack 26 at working temperature while maintaining good thermal and chemical stability.

An improved method of coating and assembly a SOFC stack includes applying a seal enhancing coating onto the sealing surfaces 39 of the separator plate 28 and applying a conductive coating onto the conductive surfaces 28a, 28b of the separator plate 28. It is preferable that the coating be applied by electroplating, electroless plating, and physical vapor deposition. It was found that these coating processes provide a desirable uniform coating of material having a low level of porosity. The coatings may also be applied by chemical vapor deposition or slurry deposition. After the application of the seal enhancing and conductive coatings, the separator plate 28 is heated treated in a reducing atmosphere such that the seal enhancing and conductive coatings are bonded onto their respective surfaces on the separator plate 28. In contrast to traditionally applying and co-firing the coatings separately, the improved method applies both coatings and then simultaneously co-firing the separator plate 28 to bond the coatings.

If a cobalt or cobalt oxide coating is used to coat the conductive surfaces 28a, 28b, the coated separator plate 28 is then heat treated in a reducing atmosphere, which is selected from a group of atmospheres consisting of hydrogen, nitrogen (low partial oxygen), and vacuum at an elevated temperature and time such that the cobalt diffuses into the separator plate 28 forming a cobalt oxide layer near the conductive surface, a metallic cobalt layer beneath the cobalt oxide layer, and a cobalt rich stainless steel alloy beneath the metallic cobalt layer. A similar coating structure is also derived with the aluminum coated sealing surfaces where the aluminum diffuses into the metal substrate and a gradient of aluminum in the metal substrate and alumina in the surface is obtained which is desirable for glass seal bonding. It is desirable for the step of co-firing of the separator plate 28 at 800°C - 1000 °C for a time period for at least 15 minutes.

After heat treating the separator plate 28, the separator plate 28 is then assembled onto the cell-retainer assembly 24 to form a fuel cell cassette 32 as disclosed above. A plurality of fuel cell cassettes is assembled in a SOFC stack 26, with the glass sealant 42 applied between each of the fuel cell cassettes 32. The SOFC stack is heat treated a second time at 850°C - 1050 °C to devitrify the glass sealant 42 into a bonded glass joint and to sinter the stack into one complete unit.

In an alternative embodiment, the seal enhancing and conductive coatings may be applied to a plurality of separator plates 28. The separator plates 28 are then assembled onto a plurality of complementary cell-retainer assemblies 24 to form a plurality of fuel cell cassettes 32. The fuel cell cassettes 32 are in turn assembled into a SOFC stack 26 with a glass sealant 42 applied between the sealing surfaces of each cassette 32. The glass sealant 42 may be applied as a glass paste or glass tape containing binders. The entire SOFC stack 26 is then co-fired within a reducing atmosphere, after the initial binders are burnt out, at between 850 °C to 1050 °C to concurrently bond the sealing and conductive coatings to their respective surfaces on the separator plate and to form a glass seal joint therebetween each cassette.

The improved method of coating and assembling a SOFC stack provides the advantages of a robust seal between the fuel cell cassettes 32 as well as improved adherence of conductive and sealing coatings. The reduced number of high temperature processes results in reduced oxidation in uncoated surfaces of the SOFC stack components, thereby improving the robustness of the overall SOFC stack. The improve method is conducive to high volume manufacturability by reducing the number of high temperature firing steps required, thereby reducing the complexity of manufacturing and lowering cost.

## Claims

1. A method of making a solid oxide fuel cell (SOFC) stack (26) comprising the steps of:
providing a separator plate (28) having an anode conductive surface (28a), a cathode conductive surface (28b) opposite of said anode conductive surface, and a sealing surface (39);
applying a seal enhancing coating onto said sealing surface;
applying a conductive coating onto at least one of said conductive surfaces;
simultaneously co-firing said seal enhancing and conductive coatings such that said seal enhancing and conductive coatings are bonded into said sealing surface and said at least one of conductive surfaces, respectively.

2. A method of making a SOFC stack of claim 1,
wherein said separator plate (28) comprises a ferritic stainless steel alloy including chromium;
wherein said sealing enhancing coating comprises aluminum, oxides of aluminum, or mixtures thereof;
wherein said conductive coating comprises cobalt, oxides of cobalt, or mixtures thereof;
wherein said step of co-firing includes heat treating said separator plate at an elevated temperature and time in a reducing atmosphere such that said aluminum and cobalt are partially diffused into said sealing surface and said at least one of conductive surfaces, respectively.

3. A method of making a SOFC stack of claim 2,
wherein said sealing enhancing coating and said conductive coating is applied onto said respective surfaces by a process selected from a group consisting of electroplating, electroless plating, chemical vapor deposition, slurry deposition and physical vapor disposition.

4. A method of making a SOFC stack of claim 2,
wherein said sealing enhancing coating and said conductive coating is applied onto said respective surfaces by a process selected from a group consisting of electroplating, electroless plating, and physical vapor disposition.

5. A method of making a SOFC stack of claim 4,
wherein said reducing atmosphere is selected from a group consisting of hydrogen, nitrogen, low partial oxygen, and vacuum.

6. A method of making a SOFC stack of claim 5,
wherein said step of co-firing seal enhancing and conducting coatings includes heat treating said separator plate at an elevated temperature and time in said reducing atmosphere such that said cobalt diffused into said separator plate forming a cobalt oxide layer near the surface, a metallic cobalt layer beneath the cobalt oxide layer, and a cobalt rich stainless steel alloy beneath the metallic cobalt layer.

7. The method of making a SOFC stack of claim 6, wherein said step of co-firing includes heat treating said separator plate at a temperature range from 800°C to 1050°C for a time period of at least 15 minutes.

8. The method of making a SOFC stack of claim 7,
wherein said at least one of conductive surfaces is said cathode conductive surface (28b) and said sealing surface (39) is on same side of said separator plate (28) as said cathode conductive surface;
providing a cell-retainer assembly (24) having an anode layer surface (31); joining said separator plate onto said cell-retainer assembly wherein said anode conductive surface (28a) of said separator plate is in electrical communication with said anode layer surface of cell-retainer assembly, thereby forming a first fuel cell cassette (32);
providing a second fuel cell cassette having a sealing surface complementary with said sealing surface of said separator plate, wherein said second fuel cell cassette includes a cathode layer surface (34);
applying a glass sealant (42) onto one of said sealing surfaces; assembling said first fuel cell cassette onto said second fuel cell cassette with said glass sealant therebetween, wherein said cathode conductive surface of said separator plate is in electrical communication with said cathode layer surface of said second fuel cell cassette, thereby forming a fuel cell stack; and
heat treating said fuel cell stack at a sufficiently high temperature and time thereby forming a glass seal joint.

9. The method of making a SOFC stack of claim 8,
wherein said step of heating treating said fuel cell stack includes heat treating at a temperature from 850°C to 1050°C for a time period of at least 15 minutes.

10. The method of making a SOFC stack of claim 1 comprising the steps of:
providing a first cell-retainer assembly (24);
joining said separator plate (28) onto said first cell-retainer assembly, thereby forming a first fuel cell cassette (32);
providing a second fuel cell cassette having a sealing surface complementary with said sealing surface of said separator plate, wherein said second fuel cell cassette is formed by above said method;
applying a glass sealant (42) onto said sealing surface of first fuel cell cassette;
assembling said first fuel cell cassette onto said second fuel cell cassette with said glass sealant therebetween, thereby forming a SOFC stack; and
simultaneously co-firing said seal enhancing, conductive coatings, and glass sealant such that said seal enhancing and conductive coatings are bonded onto said sealing surface and said at least one of conductive surfaces, respectively, and said glass sealant forms a glass seal joint.

11. The method of making a SOFC stack of claim 10,
wherein said separator plate (28) comprises a ferritic stainless steel alloy including chromium;
wherein said sealing enhancing coating comprises aluminum, oxides of aluminum, or mixtures thereof;
wherein said conductive coating comprises cobalt, oxides of cobalt, or mixtures thereof;
wherein said step of co-firing includes heat treating said separator plate at an elevated temperature and time in a reducing atmosphere such that said aluminum and cobalt are partially diffused into said sealing surface and said at least one of conductive surfaces, respectively.

12. The method of making a SOFC stack of claim 11,
wherein said step of co-firing seal enhancing and conducting coatings includes heat treating said separator plate at an elevated temperature and time in said reducing atmosphere such that said cobalt diffused into said separator plate forming a cobalt oxide layer near the surface, a metallic cobalt layer beneath the cobalt oxide layer, and a cobalt rich stainless steel alloy beneath the metallic cobalt layer.

13. The method of making a SOFC stack of claim 10,
wherein said sealing enhancing coating and said conductive coating is applied onto said respective surfaces by a process selected from a group consisting of electroplating, electroless plating, and physical vapor disposition.

14. The method of making a SOFC stack of claim 10,
wherein said reducing atmosphere is selected from a group consisting of hydrogen, nitrogen, and vacuum.

15. The method of making a SOFC stack of claim 10,
wherein said step of co-firing seal includes heat treating at a temperature from 800°C to 1000°C for a time period of at least 15 minutes.
